**Europäisches Patentamt**

**European Patent Office**

**Office européen des brevets**

(19)

(11) Veröffentlichungsnummer : **0 047 402**
**B1**

(12)

# EUROPÄISCHE PATENTSCHRIFT

(45) Veröffentlichungstag der Patentschrift :
05.06.85

(51) Int. Cl.⁴ : **B 60 R 13/04**, B 60 P   3/32

(21) Anmeldenummer : **81106302.3**

(22) Anmeldetag : **13.08.81**

(54) **Winkelprofil aus Kompaktgummi zur Abdeckung von Kanten von Wohnwagen.**

(30) Priorität : **19.08.80 DE 3031264**

(43) Veröffentlichungstag der Anmeldung :
**17.03.82 Patentblatt 82/11**

(45) Bekanntmachung des Hinweises auf die Patenterteilung : **05.06.85 Patentblatt 85/23**

(84) Benannte Vertragsstaaten :
**DE FR GB IT NL**

(56) Entgegenhaltungen :
**DE-A- 2 906 932**
**DE-A- 2 915 850**
**US-A- 3 200 547**

(73) Patentinhaber : **METZELER KAUTSCHUK GMBH**
**Gneisenaustrasse 15**
**D-8000 München 50 (DE)**

(72) Erfinder : **Nehr, Wolfgang**
**Dorfstrasse 6a**
**D-8990 Bodolz-Enzisweiler (DE)**

(74) Vertreter : **Michelis, Theodor, Dipl.-Ing.**
**Gneisenaustrasse 15**
**D-8000 München 50 (DE)**

EP 0 047 402 B1

## Beschreibung

Die Erfindung betrifft ein Winkelprofil aus Kompaktgummi zur Abdeckung von Kanten von Wohnwagen, insbesondere mit genarbten oder gesickten Außenblechen, mit einer auf die Außenseite des Winkelprofils aufgeklemmten, metallischen Zierleiste.

Aus der US-A-3 200 547 ist ein Winkelprofil bekannt, das zum Ausgleich von Höhenunterschieden in der Oberfläche der Wandung auf seiner Innenseite, auch im Kantenbereich, mit einer Zellschicht aus Kunststoff versehen ist.

Ein Winkelprofil aus Kompaktgummi zur Abdeckung von Kanten von Wohnwagen der angegebenen Gattung geht aus der DE-A1-29 06 932 hervor und weist eine auf die Außenseite des Winkelprofils aufgeklemmte, metallische Zierleiste auf. Dieses Winkelprofil soll die empfindlichen Kanten des Wohnwagens gegen Einwirkungen von Stößen und Schlägen schützen und außerdem verhindern, daß Feuchtigkeit in den Kantenbereich eindringen kann. Wenn die zu verkleidenden Kanten jedoch aus Blechen bestehen, die genarbt oder gesickt sind, reicht die Komprimierbarkeit des verwendeten Kompaktgummis nicht aus, um die bis zu 3 mm tiefen Sicken auszufüllen. Aus diesem Grunde wird bisher der an der Sicke entstehende Spalt zwischen dem Winkelprofil und dem Außenblech mit einer zusätzlichen Dichtmasse ausgespritzt.

Eine derartige Arbeitsweise ist jedoch sehr aufwendig, da neben der Handhabung für das Aufbringen des Profils selbst, das aufgeschraubt wird oder mit einer klebenden Dichtmasse versehen ist, noch zusätzlich die Sicken ausgespritzt werden müssen. Dieser Arbeitsgang muß sehr präzise ausgeführt werden, damit einerseits Hohlräume vermieden werden und andererseits keine Überhöhungen entstehen, die das Winkelprofil von der Außenseite der Kante abheben und damit das Eindringen von Wasser ermöglichen könnten.

Der Erfindung liegt deshalb die Aufgabe zu Grunde, ein Winkelprofil der angegebenen Gattung zu schaffen, das leicht montiert werden kann und gleichzeitig eine sichere Abdichtung gegenüber uneben geformten Außenblechen gewährleistet.

Diese Aufgabe wird erfindungsgemäß dadurch gelöst, daß das Winkelprofil aus Kompaktgummi mit einer Shore-A-Härte von 60 besteht und auf seiner Innenseite mindestens im Kantenbereich mit einer lippenförmigen Zellgummischicht versehen ist.

Die mit der Erfindung erzielten Vorteile beruhen insbesondere darauf, daß ein Winkelprofil aus Kompaktgummi mit der angegebenen Shorehärte und eine lippenförmige Zellgummischicht, die eine wesentlich höhere Komprimierbarkeit als das Winkelprofil hat, alle vorhandenen Höhenunterschiede in der Oberfläche der Wandung bis zu einer Tiefe von mehr als 3 mm ausgleichen können. Da Sicken in der Außenwandung im allgemeinen nicht tiefer als 3 mm sind, werden diese Sicken durch das Winkelprofil und insbesondere durch die lippenförmige Zellgummischicht ausgefüllt, so daß ein nachträgliches Ausspritzen dieser Sicken entfällt. Wird das Winkelprofil noch zusätzlich auf seiner Innenseite mit einer Butyldichtmasse beschichtet, so ergibt sich eine wesentliche Montageerleichterung bei gleichzeitig sehr guter Haftung des Winkelprofils auf der Außenwand.

Die Erfindung wird im folgenden an Hand eines Ausführungsbeispiels unter Bezugnahme auf die beiliegenden, schematischen Zeichnungen näher erläutert. Es zeigen

Figur 1 einen Querschnitt durch das Winkelprofil vor seinem Einbau,

Figur 2 einen Querschnitt durch dieses Profil im eingebauten Zustand an einer Kante eines Wohnwagens, und

Figur 3 einen Teil-Längsschnitt durch diese Kante entsprechend der Schnittlinie III-III nach Fig. 2.

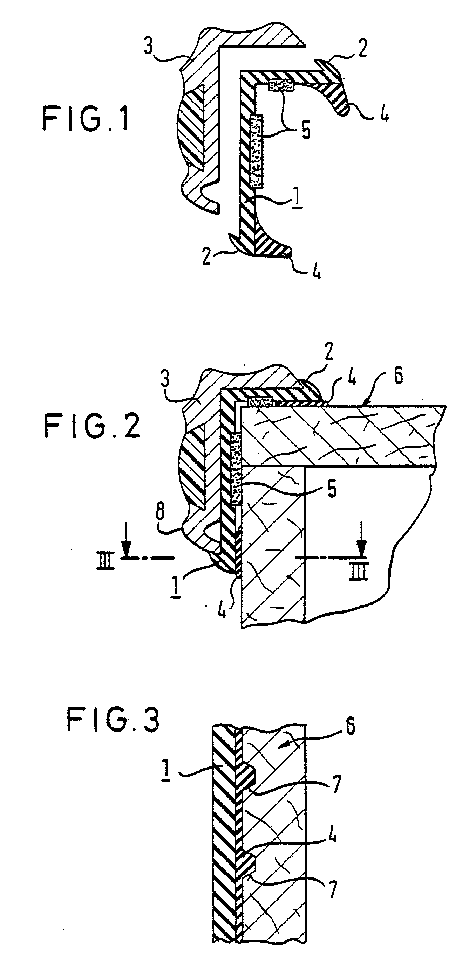

Wie aus Fig. 1 zu ersehen ist, besteht das Winkelprofil aus einem Kompaktgummi mit einer Shore-A-Härte von 60 und weist an den beiden Enden seiner freien Schenkel nach außen ragende Vorsprünge 2 auf, in die beispielsweise das Aluminiumprofil 3 eingeklemmt werden kann. Auf der Innenseite des Winkelprofils 1 sind ebenfalls im Bereich seiner Enden Lippen 4 aus Zellgummi angeordnet. Die freien Bereiche der Innenseite des Winkelprofils 1 oder Teile davon sind ferner mit einer Butyldichtmasse beschichtet, um ein einfaches Befestigen an der Wohnwagenkante zu ermöglichen.

Das Winkelprofil in eingebautem Zustand ist in Fig. 2 gezeigt. Zum Anbringen des Winkelprofils wird dabei zunächst die auf der Klebstoffschicht 5 befindliche Schutzfolie abgezogen. Das Winkelprofil kann dann direkt auf die abzudeckende Kante 6 fest aufgesetzt und aufgeklebt werden, wobei sich die Zellgummilippen 4 im glatten Bereich der Außenwandung flachdrücken und eine gute Abdichtung gegen die Wandung 6 bewirken. Wenn dabei die Zellgummilippen 4 direkt im Bereich des höchsten Druckpunktes 8 des von außen aufgesetzten Aluminiumprofils 3 liegen, wird dadurch der Anpreßdruck noch verstärkt.

Wie aus Fig. 3 ersichtlich ist, die einen Längsschnitt durch die Wandung und das Profil im Bereich einer Zellgummilippe 4 zeigt, dringt bei vorhandenen Sicken 7 in der Wandung 6 des Wohnwagens die Zellgummilippe 4 in diese Sicke 7 ein und dichtet diese vollständig ab, so daß keine zusätzliche Dichtmasse eingespritzt werden muß.

Damit ist auf einfache Weise eine vollständige Abdichtung des Kantenbereiches und des Raumes zwischen dem Winkelprofil und der Wohnwagenwandung sichergestellt.

Das Winkelprofil nach der Erfindung ist vorstehend am Beispiel der Abdeckung von Wohnwagenkanten dargestellt. Selbstverständlich ist es aber auch möglich, andere zu schützende Kanten damit abzudecken, wobei dieses Profil besondere Vorteile dann aufweist, wenn die abzudichtenden Flächen nicht ganz eben sind.

**Patentansprüche**

1. Winkelprofil aus Kompaktgummi zur Abdeckung von Kanten von Wohnwagen, insbesondere mit genarbten oder gesickten Außenblechen,
    a) mit einer aufgeklemmten, metallischen Zierleiste (3) auf der Außenseite des Winkelprofils (1), dadurch gekennzeichnet, daß
    b) das Winkelprofil (1) aus Kompaktgummi mit einer Shore-A-Härte von 60 besteht und
    c) auf seiner Innenseite mindestens im Kantenbereich mit einer lippenförmigen Zellgummischicht (4) versehen ist.
2. Winkelprofil nach Anspruch 1, dadurch gekennzeichnet, daß
    d) die lippenförmige Zellgummischicht (4) im Bereich des höchsten Druckpunktes (8) der aufgeklemmten Zierleiste (3) angeordnet ist.
3. Winkelprofil nach einem der Ansprüche 1 oder 2, dadurch gekennzeichnet, daß das Winkelprofil (1) auf seiner Innenseite mit einer Butyldichtmasse (5) beschichtet ist.

**Claims**

1. A corner profile of compact rubber for covering the edges of motor caravans, particularly where the external sheet metal is cracked or creased,
    a) with a metallic trim (3) clamped onto the outside of the corner profile (1), characterised in that
    b) the corner profile (1) consists of compact rubber having a Shore-A hardness of 60, and
    c) is provided with a lip-shaped foam rubber layer (4) on the inside thereof at least in the edge region.
2. A corner profile according to claim 1, characterised in that
    d) the lip-shaped foam rubber layer (4) is arranged in the region of the highest centre of pressure of the clamped trim (3).
3. A corner profile according to one of claims 1 or 2, characterised in that the inside of the corner profile (1) is coated with a butyl sealing composition (5).

**Revendications**

1. Cornière en caoutchouc compact destinée à recouvrir des arêtes de caravanes, notamment à tôles extérieures grainées ou moulurées,
    a) comprenant une baguette métallique de décoration (3) bloquée sur le côté extérieur de la cornière (1) caractérisée en ce que
    b) la cornière (1) est en caoutchouc compact ayant une dureté shore A de 60, et
    c) elle est munie, sur son côté extérieur, au moins dans la région des arêtes, d'une couche (4) de caoutchouc alvéolaire en forme de lèvres.
2. Cornière suivant la revendication 1, caractérisée en ce que
    d) la couche (4) de caoutchouc alvéolaire en forme de lèvres est disposée dans la région du point le plus élevé (8) d'application d'une pression du profilé de décoration (3) qui est bloqué.
3. Cornière suivant la revendication 1 ou 2, caractérisée en ce que la cornière (1) est enduite, sur son côté intérieur, d'une composition de jointoiement en caoutchouc butyl (5).

FIG.1

FIG.2

FIG.3